# EUROPEAN PATENT SPECIFICATION

(11) **EP 1 810 823 B1**
(45) Date of publication and mention of the grant of the patent: **24.12.2008**
(21) Application number: 06425027.7
(22) Date of filing: 20.01.2006
(51) Int. Cl.: B32B 27/32, B65D 65/40

(54) **Multilyer heat-seal packaging film for foodstuff**
Mehrschichtige heisssiegelbarer Verpackungsfilm für Nahrungsmittel
Feuilles d'emballage multicouche ayant des caractéristiques de scellement à chaud pour produit alimentaire

(43) Date of publication of application: 25.07.2007
(73) Proprietor: VIBAC S.p.A., I-15040 Ticineto (Alessandria) (IT)
(72) Inventor: Guida, Filippo, 67100 L'Aquila (IT); Campanella, Vincenzo, 67100 L'Aquila (IT); Magno, Carmela, 67010 Bazzano (AQ) (IT)
(74) Representative: Gerbino, Angelo

(56) References cited:
- EP-A- 0 136 059
- EP-A- 0 499 669
- WO-A-97/28960
- GB-A- 2 059 340

## Description

The present invention relates to a film that can be used in particular for the packaging of foodstuffs.

Flexible films are typically used for this purpose, and following a packaging process they are transformed into bags or sachets for containing the said foodstuffs.

The nature and composition of these flexible films largely depend on the nature of the products they are to contain. In particular, there is ever increasing use of laminated flexible films, which can be produced by lamination or the joining together of different layers, each of which contributes functions to the final packaging.

A common and essential element of the structure of a laminated film intended for making bags for containing foodstuffs is the presence of a covering layer - intended to come in contact with the foodstuff - which should be heat-sealable. Industrially, in fact, the bag manufacturing process, which is effected simultaneously with bag filling, is typically carried out using electrically-heated metal bars which are provided of a pneumatic or hydraulic closing system. In particular, once the film has been folded onto itself to bring two edges of the covering layer in contact with one another, the film is clamped between said bars, so that it can be submitted to the simultaneous action of temperature and pressure leading to welding of said edges and closure of the bag.

In a variant of this process, the film that is placed between the welding bars is folded so as to bring into contact edges of the covering layers that constitute the two opposite external faces of the film. In this case both said layers must have the property of being heat-sealable.

The welds thus produced must have the characteristic of exhibiting a very high sealing strength so as to ensure perfect closure of the bag. This high sealing strength of the weld, which is absolutely necessary for ensuring proper preservation of the foodstuff during the various stages of transport of the package to the point of sale to the final consumer, gives rise to problems at the moment of opening the package. In fact, at this time, the consumer must exert a correspondingly high force to succeed in separating the welded layers in order to open the package. Consequently, once the weld gives and the package opens, the force applied by the consumer continues to be exerted through inertia for fractions of a second on the non-welded walls of said package, but they do not possess the same weld strength. Consequently, there is likely to be uncontrolled breakage of the package, often accompanied by spilling of the foodstuff, when the latter is in granular form (peanuts or other savoury snacks) or pieces of small and/or medium size (crisps, sweet or savoury biscuits).

To overcome these drawbacks, it has already been suggested to make heat-sealable structures of multilayer film, in which one layer has a composition such that it can be peeled from the adjacent layer, or having a sealing strength with respect to the latter that is less than that holding the two heat-sealed edges of the film together. Then the package is opened by detaching the peelable layer from the adjacent layer, while the welded edges remain joined together, without the need to exert the high and - as we have seen - potentially hazardous force necessary for breaking the weld.

The aim of the present invention is to provide a heat-sealable and peelable multilayer film that has an improved structure.

This aim is achieved with a multilayer film, based on biaxially oriented polypropylene, comprising at least:
- a base layer substantially of polypropylene,
- a first heat-sealable outer layer comprising at least one propylene copolymer and at least one α-olefin, and
- a first intermediate layer interposed between the base layer and the first outer layer, and formed substantially of polypropylene and an ethylene-acrylic acid copolymer.

In the film of the invention, the characteristics of peelability are imparted by using, in the first intermediate layer, an ethylene-acrylic acid copolymer that is characterized by displaying dual behaviour. Thus, on the one hand, the polyethylene portion has characteristics of affinity with polypropylene, which therefore gives rise to a certain bond strength with the adjacent layers containing polypropylene. On the other hand, the acrylic portion, being of a polar nature, is incompatible with polypropylene and acts as an adhesion disturbing element, reducing the bond with the adjacent layers. Therefore, by adjusting the amount of said copolymer blended with polypropylene in the first intermediate layer, the strength of the seal with the adjacent layers can be varied as required. At the same time, adjusting the proportion of said copolymer makes it possible to control the properties of transparency of the film.

The film of the invention can be used either on its own, or as an internal component of a laminated structure for making heat-sealed bags, sachets and/or packages for containing foodstuffs. On this basis, heat-sealing can be carried out that is suitable for proper preservation of the foodstuffs and for handling of the package, and at the same time the force required for opening it is greatly reduced and is not such as to cause its uncontrolled breakage. Gradual, controlled opening is thus possible.

Preferably, the first intermediate layer is formed from polypropylene at a percentage between 90 and 50 wt.% and from ethylene-acrylic acid copolymer at a percentage between 10 and 50 wt.%. Again preferably, the ethylene-acrylic acid copolymer contains acrylic acid at a percentage between 3 and 18 wt.% and preferably between 4 and 9 wt.%. Commercially available copolymers of this kind are for example PRIMACOR 3440 from Dow Plastics and Appeel 20D745 from DuPont, as well as homologous products of the same type.

In a preferred embodiment of the invention, the film further comprises a second intermediate layer and a second heat-sealable outer layer, arranged, relative to the base layer, opposite to the first intermediate layer and the first outer layer.

Preferably, the second intermediate layer is comprised substantially of polypropylene, whereas the second outer layer comprises at least one propylene copolymer and at least one α-olefin. Especially preferably, the first and the second outer layer are comprised substantially of a propylene-ethylene-butylene terpolymer having a melt flow index (MFI) between 4 and 8 g/10min at 230°C and 2.16 kg.

According to this last-mentioned embodiment, the film is thus formed from 5 superposed layers, which are typically coextruded, and then oriented biaxially in a conventional manner. Typically, a film of the invention has a thickness between 10 and 60 µm.

Advantageously, the second outer layer can be submitted to a corona (electric discharge) treatment or to a flame treatment to make it receptive to printing inks. Moreover, it can be metallized, for example by the known technique of vacuum deposition of aluminium, to produce a film of high peelability suitable for the packaging of foodstuffs requiring high barrier properties against oxygen.

Other advantages and characteristics of the present invention will become clear from the following examples of film composition that are given non-limitatively, in which all the percentages shown are to be understood as percentages by weight, unless stated otherwise.

### EXAMPLE 1

Base layer (A):
   - Polypropylene homopolymer MFI 2 100%
   thickness: 11.6 µm
Second intermediate layer (B):
   - Polypropylene homopolymer MFI 3 100%
   thickness: 3 µm
First intermediate layer (C):
   - Polypropylene homopolymer MFI 3 70%
   - Dow PRIMACOR 3440
      (ethylene-acrylic acid copolymer) 30%
   thickness: 3 µm
First outer layer (D):
   - Propylene-ethylene-butylene terpolymer 99.5%
   - Schulman AB PP 10 (antiblocking agent) 0.5%
   thickness: 1.2 µm
Second outer layer (E):
   - Propylene-ethylene-butylene terpolymer 99.5%
   - Schulman AB PP 10 (antiblocking agent) 0.5%
   thickness: 1.2 µm
Total thickness of the film : 20 µm

The sealing strength measured between layer D and layer C is less than the sealing strength between two layers each of which is composed of polypropylene, and the degree of transparency is also lower.

### EXAMPLE 2

This is similar to example 1, differing only with respect to the composition of layer (C) which is:
- Polypropylene homopolymer MFI 3 80%
- Dow PRIMACOR 3440
   (ethylene-acrylic acid copolymer) 20%

The sealing strength measured between layer D and layer C is found to be less than the sealing strength between two layers each of which is composed of propylene, but is greater than that of the film in Example 1. The film in Example 2 is also found to be more transparent than that in Example 1.

Using films having the structure stated in the examples given above, sachet-type packages are produced, with heat sealing between said films and respective outer layers. The packages are then subjected to an increasing internal pressure, to find the pressure at which opening occurs. The following results were obtained:

| | |
|---|---|
| Package according to Example 1: | 6000 Pa |
| Package according to Example 2: | 8500 Pa |

These results are consistent with the observations reported above concerning the differences in sealing strength between layers D and C.

As for transparency, the relevant data expressed as "haze" - measured by the method described in ASTM D1003 - are as follows:

| | |
|---|---|
| Package according to Example 1: | 9% |
| Package according to Example 2: | 5% |

It is clear from all the experimental data presented above that by adjusting the amount of ethylene-acrylic acid copolymer present in the first intermediate layer, the values of peelability and transparency can be varied over a wide range. This demonstrates the versatility of the film of the invention, permitting it to be used for a great variety of applications in the area of packaging of foodstuffs.

## Claims

1. Multilayer film, based on biaxially oriented polypropylene, comprising at least:
- a base layer substantially of polypropylene,
- a heat-sealable first outer layer comprising at least one propylene copolymer and at least one α-olefin, and
- a first intermediate layer interposed between the base layer and the first outer layer, and formed substantially from polypropylene and an ethylene-acrylic acid copolymer.

2. Film according to claim 1, in which said first intermediate layer is formed from polypropylene at a percentage between 90 and 50 wt.% and from ethylene-acrylic acid copolymer at a percentage between 10 and 50 wt.%.

3. Film according to claim 2, in which said ethylene-acrylic acid copolymer contains acrylic acid at a percentage between 3 and 18 wt.% and preferably between 4 and 9 wit.%.

4. Film according to any one of the preceding claims, further comprising a second intermediate layer and a second heat-sealable outer layer, arranged, relative to the base layer, opposite to the first intermediate layer and to the first outer layer.

5. Film according to claim 4, in which said second intermediate layer is constituted substantially of polypropylene.

6. Film according to claim 4 or 5, in which said second outer layer comprises at least one propylene copolymer and at least one α-olefin.

7. Film according to any one of the preceding claims, in which the first and/or the second outer layer are constituted substantially of a propylene-ethylene-butylene terpolymer having an MFI between 4 and 8 g/10 min at 230°C and 2.16 kg.

8. Film according to any one of the preceding claims from 4 to 7, in which said second outer layer had undergone a corona treatment or a flame treatment.

9. Film according to any one of the preceding claims, in which said film has a thickness between 10 and 60 µm.

10. Laminated composite structure comprising a film according to any one of the preceding claims, in which the external positioning of said first outer layer of the film is maintained.

11. Laminated structure according to claim 10, in which a layer of aluminium has been deposited on a film according to any one of the claims from 1 to 9.

12. Laminated structure according to claim 11, in which said aluminium layer was deposited by the vacuum metallization technique.

## Patentansprüche

1. Mehrschichtige Folie, basierend auf biaxial gerecktem Polypropylen, wobei die Folie zumindest umfasst:
- eine Basisschicht im Wesentlichen aus Polypropylen,
- eine heißverschweißbare erste Außenschicht, die zumindest ein Propylen-Copolymer sowie zumindest ein α-Olefin umfasst, und
- eine erste Zwischenschicht, die zwischen der Basisschicht und der ersten Außenschicht angeordnet ist und im Wesentlichen aus Polypropylen und einem Ethylen-Acrylsäure-Copolymer gebildet wird.

2. Folie gemäß Anspruch 1, wobei die erste Zwischenschicht von Polypropylen mit einem Anteil zwischen 90 und 50 Gew.% und von Ethylen-Acrylsäure-Copolymer mit einem Anteil zwischen 10 und 50 Gew.% gebildet wird.

3. Folie gemäß Anspruch 2, wobei das Ethylen-Acrylsäure-Copolymer Acrylsäure mit einem Anteil zwischen 3 und 18 Gew.% und vorzugsweise zwischen 4 und 9 Gew.% enthält.

4. Folie gemäß irgendeinem der bisherigen Ansprüche, wobei die Folie weiters eine zweite Zwischenschicht sowie eine zweite heißverschweißbare Außenschicht umfasst, die relativ zur Basisschicht gegenüber der ersten Zwischenschicht und der ersten Außenschicht angeordnet sind.

5. Folie gemäß Anspruch 4, wobei die zweite Zwischenschicht im Wesentlichen von Polypropylen gebildet wird.

6. Folie gemäß Anspruch 4 oder 5, wobei die zweite Außenschicht zumindest ein Propylen-Copolymer sowie zumindest ein α-Olefin umfasst.

7. Folie gemäß irgendeinem der bisherigen Ansprüche, wobei die erste und/oder die zweite Außenschicht im Wesentlichen von einem Propylen-Ethylen-Buthylen-Terpolymer gebildet werden, das einen Schmelz-Index zwischen 4 und 8 g/10 min bei 230°C und 2,16 kg besitzt.

8. Folie gemäß irgendeinem der bisherigen Ansprüche von 4 bis 7, wobei die zweite Außenschicht einer Coronabehandlung oder einer Flammenbehandlung unterzogen wurde.

9. Folie gemäß irgendeinem der bisherigen Ansprüche, wobei die Folie eine Dicke zwischen 10 und 60 µm besitzt.

10. Geschichteter Verbundaufbau, der eine Folie gemäß irgendeinem der bisherigen Ansprüche umfasst, wobei die externe Anordnung der ersten Außenschicht der Folie beibehalten wird.

11. Geschichteter Aufbau gemäß Anspruch 10, wobei eine Schicht aus Aluminium auf einer Folie gemäß irgendeinem der Ansprüche von 1 bis 9 aufgebracht wurde.

12. Geschichteter Aufbau gemäß Anspruch 11, wobei die Aluminiumschicht mit einem Metallisierungsverfahren im Vakuum aufgebracht wurde.

## Revendications

1. Film multicouche, à base de polypropylène orienté de manière biaxiale, comprenant au moins :
une couche de base essentiellement de polypropylène,
une première couche extérieure thermosoudable comprenant au moins un copolymère de propylène et au moins une α-oléfine, et
une première couche intermédiaire intercalée entre la couche de base et la première couche extérieure, et formée essentiellement de polypropylène et d'un copolymère éthylène-acide acrylique.

2. Film selon la revendication 1, dans lequel ladite première couche intermédiaire est formée de polypropylène à un pourcentage compris entre 90 % et 50 % en poids et d'un copolymère éthylène-acide acrylique à un pourcentage compris entre 10 % et 50 % en poids.

3. Film selon la revendication 2, dans lequel ledit copolymère éthylène-acide acrylique contient de l'acide acrylique à un pourcentage compris entre 3 % et 18 % en poids et de préférence entre 4 % et 9 % en poids.

4. Film selon l'une quelconque des revendications précédentes, comprenant en outre une deuxième couche intermédiaire et une deuxième couche extérieure thermosoudables, agencées, par rapport à la couche de base, de manière opposée à la première couche intermédiaire et à la première couche extérieure.

5. Film selon la revendication 4, dans lequel ladite deuxième couche intermédiaire est constituée essentiellement de polypropylène.

6. Film selon la revendication 4 ou 5, dans lequel ladite deuxième couche extérieure comprend au moins un copolymère de propylène et au moins une α-oléfine.

7. Film selon l'une quelconque des revendications précédentes, dans lequel la première et/ou la deuxième couche extérieure sont constituées essentiellement d'un terpolymère propylène-éthylène-butylène ayant un MFI compris entre 4 et 8 g/10 min à 230°C et 2,16 kg.

8. Film selon l'une quelconque des revendications 4 à 7 précédentes, dans lequel ladite deuxième couche extérieure a subi un traitement corona ou un traitement à la flamme.

9. Film selon l'une quelconque des revendications précédentes, dans lequel ledit film a une épaisseur comprise entre 10 µm et 60 µm.

10. Structure composite stratifiée comprenant un film selon l'une quelconque des revendications précédentes, dans laquelle le positionnement externe de ladite première couche extérieure du film est maintenu.

11. Structure stratifiée selon la revendication 10, dans laquelle une couche d'aluminium a été déposée sur un film selon l'une quelconque des revendications 1 à 9.

12. Structure stratifiée selon la revendication 11, dans laquelle ladite couche d'aluminium est déposée par la technique de métallisation sous vide.
